# EUROPEAN PATENT SPECIFICATION

(11) **EP 1 233 551 B1**
(45) Date of publication and mention of the grant of the patent: **03.08.2005**
(21) Application number: 02250992.1
(22) Date of filing: 13.02.2002
(51) Int. Cl.: H04B 10/10

(54) **Optical transmitting/receiving method and system, and optical communication network**
Verfahren und Vorrichtung zum optischen Senden/Empfängen und optisches Kommunikationsnetzwerk
Système et procédé d' émission/réception optique et réseau de communication optique

(30) Priority: 15.02.2001 JP 2001039179
(43) Date of publication of application: 21.08.2002
(60) Divisional application: 05012114.4
(73) Proprietor: NTT DoCoMo, Inc., Tokyo 100-6150 (JP)
(72) Inventor: Yuji, Aburakawa, Yokohama-shi, Kanagawa 236-0058 (JP); Toru, Otsu, Yokohama-shi, Kanagawa 236-0057 (JP); Yasushi, Yamao, Yokosuka-shi, Kanagawa 239-0822 (JP)
(74) Representative: Rees, Alexander Ellison

(56) References cited:
- EP-A- 0 859 478
- WO-A-00/04660
- WO-A-00/25455
- WO-A-98/32250
- US-B1- 6 239 888
- YENICE Y E; EVANS B G: "Adaptive beam-size control for ground to satellite laser communications" CONF - FREE SPACE LASER COMMUNICATION TECHNOLOGIES X, 27 - 28 January 1998, pages 221-230, XP009013880 San Jose, CA, USA
- ARNON S; ROTMAN S; KOPEIKA N S: "Beam width and transmitter power adaptive to tracking system performance for free-space optical communication" APPLIED OPTICS, vol. 36, no. 24, 20 August 1997 (1997-08-20), pages 6095-6101, XP001153709 USA

## Description

### BACKGROUND OF THE INVENTION

### 1. Field of the Invention

The present invention generally relates to an optical transmitting/receiving system for performing optical space transmission, more particularly to the optical transmitting/receiving system which varies a beam size of optical signals in optical space transmission, and to an optical communication network including the system.

The present invention also relates to a method for establishing the optical communication network which includes optical fiber transmission paths and optical space transmission paths for preventing communication traffic from converging and for achieving stable data transmission.

### 2. Description of the Related Art

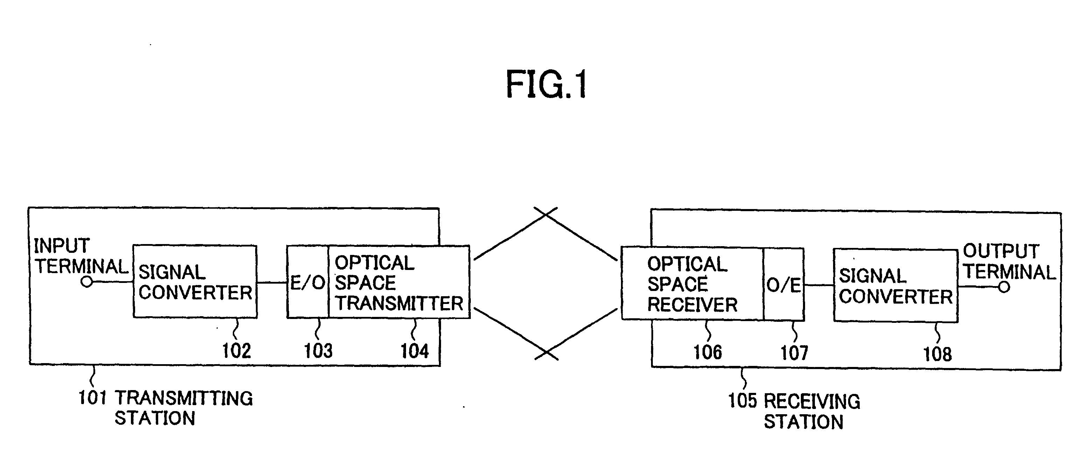

A conventional optical space signal transmitting/receiving system for performing the optical space transmission is described with reference to Fig.1. Fig.1 shows a configuration of the conventional optical space signal transmitting/receiving system for performing the optical space transmission.

In Fig.1, a transmitting station 101 includes a signal converter 102, an electrical/optical(E/O) converter 103, and an optical space transmitter 104. The optical space transmitter 104 may be, for example, a lens for converting an incident light that is a collective light into a radiation beam.

Information signals input from an input terminal of the transmitting station 101 are converted into signals for optical space transmission by the signal converter 102, are converted into optical signals by the E/O converter 103, and are transmitted into the atmosphere by the optical space transmitter 104.

A receiving station 105 includes an optical space receiver 106, an optical/electrical(O/E) converter 107, and a signal converter 108. The optical space receiver 106 may be, for example, a lens for converting an incident light that is a part of a radiation beam into a collective light.

The optical signals transmitted from the transmitting station 101 via the atmosphere are received by the optical space receiver 106 of the receiving station 105, are converted into electrical signals by the O/E converter 107, are converted into the original information signals by the signal converter 108, and are output from an output terminal.

Although the above conventional optical transmitting/receiving system has merit in that it can be easily installed as long as an unobstructed view is secured, since propagation loss (or atmospheric attenuation) due to weather conditions such as rainfall, fog and the like is significant, a long transmission distance cannot be employed and the application is limited to transmission at a limited distance.

To solve this problem, one solution is to adjust the size of the beam at the transmitter according to predetermined conditions, such as atmospheric conditions. Such a solution is disdosed in "Adaptive beam-size control for ground to satellite laser communications," Yenice Y.E., Evans B.G., published at the "Free-space laser communication technologies" conference on 27-28 January 1998.

### SUMMARY OF THE INVENTION

The present invention provides an alternative solution to the above problem. The object of the present invention is to provide an optical transmitting/receiving system for securing a high quality of communication by reducing the propagation loss and for enabling the system to take advantage of easy installation, and to provide an optical communication network that can be easily established by employing the system.

The object of the present invention is also to provide a method for establishing the optical communication network which includes the optical fibre transmission paths and the optical space transmission paths for preventing communication traffic from converging and for achieving stable data transmission.

According to a first aspect of the invention, an optical transmitting/receiving method in transmitting/receiving optical beams including optical signals via a space transmission path between an optical transmitting apparatus and an optical receiving apparatus, characterised in that:
a degree of spread of the optical beam emitted from the optical transmitting apparatus to the optical receiving apparatus is varied according to a predetermined condition defined on the basis of a state of the space transmission path between the optical transmitting apparatus and the optical receiving apparatus.

In this method, the state of a propagation path of the space transmission path from the transmitting apparatus to the receiving apparatus may be, for example, a degree of the propagation loss (or the atmospheric attenuation) in the propagation path, the degree of which loss can be determined, for example, by a degree of the received level at the receiver side. In this context, the case that the propagation loss in the space propagation path is relatively small is referred to as a fine state in the space propagation path, while the case that the propagation loss is relatively large is referred to as a bad state in the space propagation path.

According to this method, since the received level of the optical signal at the receiving apparatus can be controlled by controlling the degree of spread of the optical beam, the degree of spread of the optical beam is controlled according to the state of the space propagation path between the transmitting apparatus and the receiving apparatus so that when the state of the propagation path becomes worse, the received level at the receiving apparatus is made higher. Therefore, even when the state of the propagation path is not fine, the quality of communication in the optical space transmission path is maintained.

According to a second aspect of the present invention an optical transmitting/receiving system comprising an optical transmitting apparatus and an optical receiving apparatus at which an optical beam including optical signals transmitted from the optical transmitting apparatus via a space transmission path is received, characterised in that:
the optical transmitting apparatus comprises a beam size controlling part for varying a degree of spread of the optical beam emitted to the optical receiving apparatus according to a predetermined condition defined on the basis of a state of space transmission path between the optical transmitting apparatus and the optical receiving apparatus.

In this configuration, the state of the propagation path of the space transmission path from the transmitting apparatus to the receiving apparatus may be, for example, the degree of the propagation loss (or the atmospheric attenuation) in the propagation path, the degree of which loss can be determined, for example, by the degree of the received level at the receiver side. In this context, the case that the propagation loss in the space propagation path is relatively small is referred to as a fine state in the space propagation path, while the case that the propagation loss is relatively large is referred to as a bad state in the space propagation path.

According to this configuration, whereas the received level of the optical signal at the receiving apparatus can be controlled by controlling the degree of spread of the optical beam, by controlling the degree of spread of the optical beam according to the state of the space propagation path between the transmitting apparatus and the receiving apparatus so that the state of the propagation path becomes worse, the received level at the receiving apparatus is made higher, the quality of communication in the optical space transmission path is maintained even when the state of the propagation path is not fine.

According to a third aspect of the present invention an optical communication network comprising a plurality of communication nodes each provided with a function of transmitting and receiving optical signals and connected by optical transmission paths, characterised in that:
at least one of the optical transmission paths connection two of the communication nodes is configured as an optical space transmission path,
at least one of the two communication nodes comprises a beam size controlling part for varying a degree of spread of the optical beam emitted to the other communication node of the two according to a predetermined condition defined on the basis of a state of the space transmission path.

In this configuration, the state of the propagation path of the space transmission path may be, for example, the degree of the propagation loss (or the atmospheric attenuation) in the propagation path, the degree of which loss can be determined, for example, by the degree of the received level at the receiver side. In this context, the case that the propagation loss in the space propagation path is relatively small is referred to as a fine state in the space propagation path, while the case that the propagation loss is relatively large is referred to as a bad state in the space propagation path.

According to this configuration, whereas the received level of the optical signal at the receiving node can be controlled by controlling the degree of spread of the optical beam according to the state of the space propagation path so that when the state of the propagation path becomes worse, the received level at the receiving node is made higher, the quality of communication in the optical space transmission path is maintained even when the state of the propagation path is not fine.

### BRIEF DESCRIPTION OF THE DRAWINGS

Other objects, features and advantages of the present invention will become more apparent from the following detailed description when read in conjunction with the accompanying drawings, in which:
Fig. 1 is a diagram schematically showing the configuration of the conventional optical transmitting/receiving system for optical space transmissions;
Fig. 2 is a diagram schematically showing the configuration of the optical transmitting/receiving system according to a first embodiment of the present invention;
Fig. 3 is a pattern diagram to illustrate a control of the beam size in the optical transmitting/receiving system according to the first embodiment of the present invention;
Fig. 4 is a diagram schematically showing one aspect of the optical transceiver of the optical transmitting/receiving system according to the first embodiment of the present invention;
Fig. 5 is a pattern diagram schematically showing the optical communication network according to a second embodiment of the present invention;
Fig. 6 is a diagram schematically showing another aspect of the optical communication network according to the second embodiment of the present invention;
Fig. 7 is a diagram schematically showing a further aspect of the optical communication network according to the second embodiment of the present invention.

### DETAILED DESCRIPTION OF THE PREFERRED EMBODIMENTS

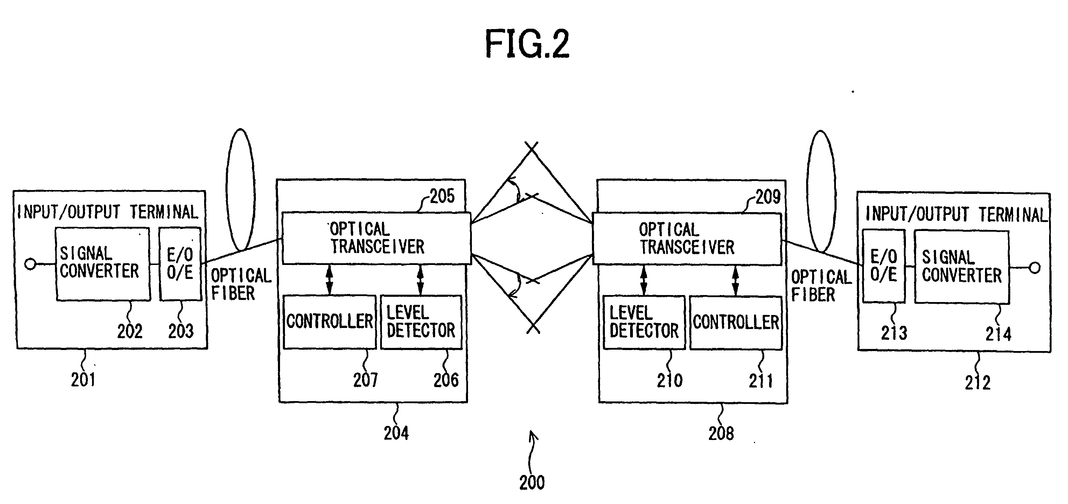

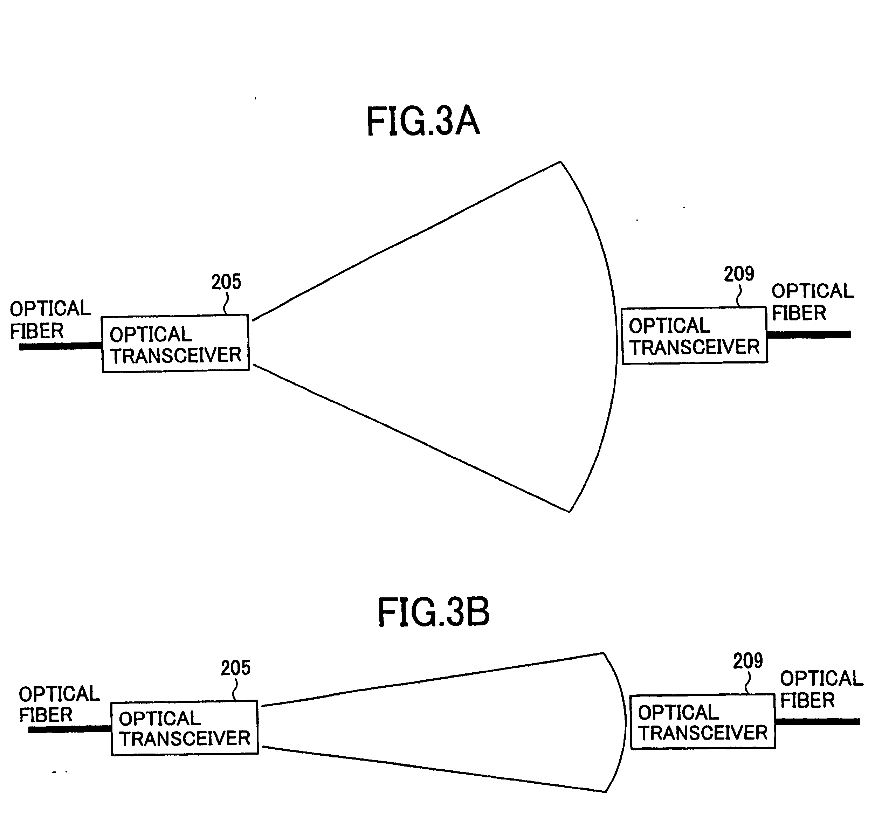

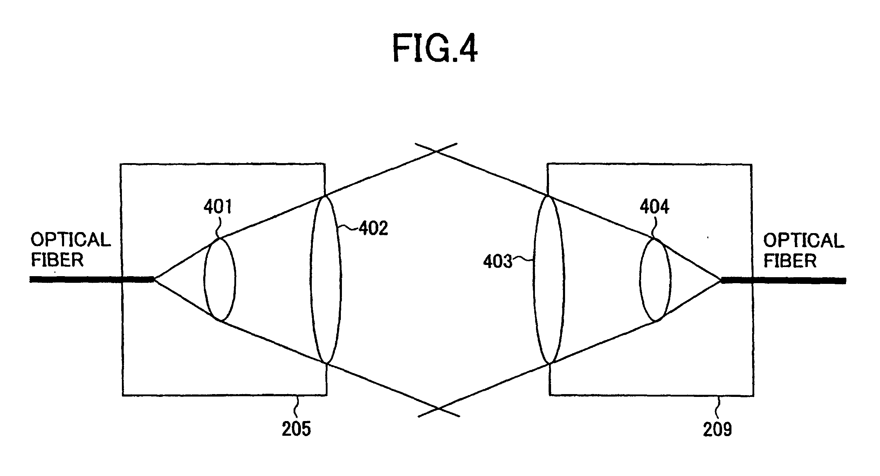

The optical transmitting/receiving system according to the first embodiment of the present invention is described with reference to Figs.2 through 4. Fig.2 shows the configuration of the optical transmitting/receiving system according to this embodiment. Fig.3 illustrates the control of the beam size in the optical transmitting/receiving system according to this embodiment. Fig.4 shows one aspect of the optical transceiver of the optical transmitting/receiving system according to this embodiment.

At first, the configuration of this embodiment is described with reference to Fig.2. An optical transmitting/receiving system 200 according to this embodiment includes optical transmitting stations and space relay stations. It is here considered as an example that the information signals are transmitted from a transmitting station 201 to a receiving station 212 via space relay stations 204 and 208. Although one station is referred to as a transmitting station, the other is referred to as a receiving station, and a one-way transmission is considered only for convenience of explanation here, this system can perform bi-directional transmission.

The transmitting station 201 includes a signal converter 202 for converting the information signals input from an input/output terminal into the signals for the optical fiber transmission, and an electrical/optical(E/O) converter 203 for converting the input electrical signals into optical signals. In the case of transmission in an inverse direction, the E/O converter 203 can serve as an optical/electrical(O/E) converter.

The space relay node 204 at a transmitter side includes an optical transceiver 205 that can vary a diffusion angle (a spread angle of the beam) in emitting optical space signals, a level detector 206 for detecting levels of the received optical signals, and a controller 207 for giving an instruction on the diffusion angle (the spread angle of the beam) set by the optical transceiver 205 in emitting the optical space signals. Since bi-directional transmission is essential, a space relay node 208 at a receiver side includes an optical transceiver 209, a level detector 210, and a controller 211, as well as the node 204 at the transmitter side includes.

A receiving station 212 includes an O/E converter 213 for converting the input optical signals into the electrical signals, and a signal converter 214 for converting the input electrical signals into the original information signals and for outputting them from an input/output terminal. In the case of transmission in the inverse direction, the O/E converter 213 can serve as the E/O converter.

Operation of the optical transmitting/receiving system of this embodiment is now described. The information signals input from the input/output terminal of the transmitting station 201 are converted into the signals for the optical fiber transmission by the signal converter 202, are converted into the optical signals by the E/O converter 203, and are outputted into the optical fiber transmission path outside of the station.

The optical signals input into the space relay node 204 via the optical fiber transmission path are converted into a beam having the size suitable for the optical space transmission by the optical transceiver 205, and are emitted into the atmosphere toward the opposed space relay node 208.

The optical space signals emitted from the space relay node 204 into the atmosphere are received by the optical transceiver 209 of the opposed space relay node 108, are converted into the collective lights for the optical fiber transmission, and are output into the receiving station 212.

The optical signals input into the receiving station 212 via the optical fiber transmission path are converted into the electrical signals by the O/E converter 213, and are converted into the original information signals by the signal converter 214.

The received levels of the optical signals at the optical transceiver 209 are detected by the level detector 210. The resulting received levels are emitted as the information signals toward the space relay node 204 by the optical transceiver 209. These information signals including the received levels at the node 208 are received by the optical transceiver 205, and are input into the controller 207. The controller 207 determines the state of the propagation path on the basis of the input received levels at the node 208, and controls the diffusion angle of the radiation beam (the spread angle of the beam) set by the optical transceiver 205.

Although only the one-way transmission is considered here for convenience of explanation, in the case of bi-directional transmission, the received levels of the optical signals at the optical transceiver 205 are detected by the level detector 206. The resulting received levels are emitted as the information signals toward the space relay node 208 by the optical transceiver 205. These information signals including the received levels at the node 204 are received by the optical transceiver 209, and are input into the controller 211. The controller 211 determines the state of the propagation path on the basis of the input received levels at the node 204, and controls the diffusion angle of the radiation beam (the spread angle of the beam) set by the optical transceiver 209.

A method for controlling the beam size in the controller 207 (and also in the controller 211) is now described with reference to Fig.3. Generally speaking, the controller 207 increases the diffusion angle of the radiation beam (the degree of spread of the beam) when the state of the space propagation path from the transmitting space relay node 204 to the receiving space relay node 208 is fine, while the controller 207 decreases the diffusion angle when the state is not fine. The state of the propagation path of the space transmission path may be, for example, the degree of the propagation loss (or the atmospheric attenuation) in the propagation path, the degree of which loss can be determined, for example, by the received level at the receiving station side as described in the above example.

It is here assumed that both an emission power in emitting the optical beam and a distance between the transmitting apparatus and the receiving apparatus are constant. In case that the state of the space propagation path is fine, such as the case, for example, in clear weather, i.e. the propagation loss is relatively small, as shown in Fig.3(a), the diffusion angle of the radiation beam (the degree of spread of the beam) is increased (is spread). Since an illumination field at the receiver side thus becomes larger, a disconnection due to a deviation of an optical axis caused by a temperature variation in the propagation path through the atmosphere particularly in the clear weather is obviated. Although the larger the illumination field becomes, the lower the received level at the receiver side, a required quality of communication is maintained as long as the state of the propagation path is fine.

In the case that the state of the space propagation path is not fine, such as the case in rainfall, in fog and the like, i.e. the propagation loss is relatively large, as shown in Fig.3(b), the diffusion angle of the radiation beam (the degree of spread of the beam) is decreased (is narrowed). Consequently the illumination field at the receiver side becomes smaller, and the received level is high enough to reduce the propagation loss.

In practice, it is preferable to control so that, for example, the received level at the receiver side is constant.

An example of the configuration of the optical transceivers 205 and 209 is then described with reference to Fig.4. Fig.4 shows one aspect having a plurality of lenses to vary the beam size. In this example, by way of illustration, the optical transceiver 205 includes lenses 401 and 402 and the optical transceiver 209 includes lenses 403 and 404. With such configuration, the beam size can be dynamically varied by movement or exchange of these lenses.

From the above, according to this embodiment, in the optical space transmission, the diffusion angle of the radiation beam is increased in order to avoid a deviation of the optical axis when the state of the propagation path is fine, while the diffusion angle of the radiation beam is decreased in order to maintain the quality of communication when the state of the propagation path is not fine.

Also, since the quality of communication is maintained even when the state of the propagation path is not fine, the optical space transmission by the optical transmitting/receiving system according to the present invention is easily employed in the optical communication network instead of the optical fiber transmission.

Further, by providing a plurality of lenses as described above, a variable diffusion angle of the radiation beam as in this embodiment is easily achieved. It is only by way of illustration in this embodiment to provide a plurality of lenses in the optical transceiver in order to vary the diffusion angle of the radiation beam. The present invention can employ any configuration as long as it can vary the diffusion angle of the radiation beam. Also, in the case of using lenses, the above aspect using two lenses is only an example, and the present invention is independent of the number of lenses.

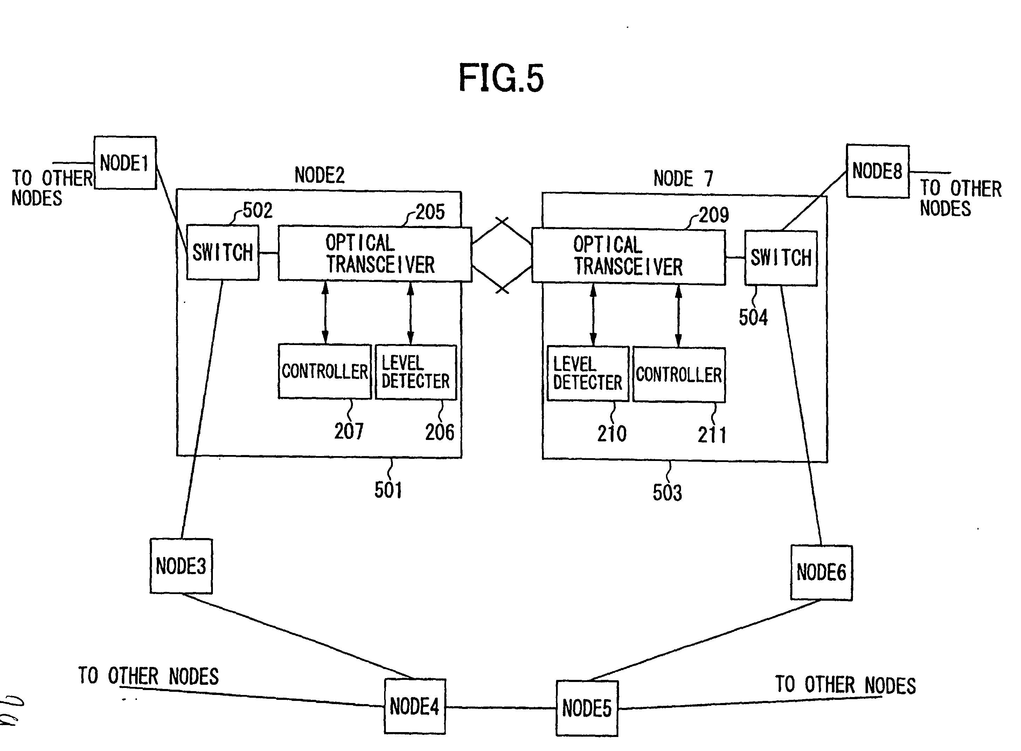

The optical communication network and the method for establishing the same according to a second embodiment of the present invention are now described with reference to Fig.5. Fig.5 shows a schematic of the optical communication network according to the second embodiment of the present invention.

The optical communication network shown in Fig.5 includes a plurality of nodes connected with each other by optical fiber transmission paths. Since, as described in the first embodiment, the optical transmitting/receiving system according to the present invention can maintain the quality of communication even when the state of the propagation path is not fine, the optical space transmission path of this system can be easily employed between the nodes instead of the optical fiber transmission paths in related art optical communication networks using optical fiber transmission.

However, the optical communication network according to this embodiment employs the optical transmitting/receiving system of the present invention not instead of the optical fiber transmission paths but additionally between two nodes that are not adjacent on the optical fiber transmission paths but maintain the unobstructed view between them, in order to provide "diversions" on the optical space transmission for the optical signals passing through the optical fiber transmission path.

In an example shown in Fig.5, among the nodes 1 through 8, the optical transmitting/receiving system according to the present invention is employed between the nodes 2 and 7 that maintain keep the unobstructed view between them. Optical transmitting/receiving apparatuses 501 and 503 have switches 502 and 504, respectively.

Here, for example, although the optical transmitting/receiving apparatus 501 referred to here as the node 2 usually outputs the optical signals intended for the node 8 when received from the node 1, it outputs them to the node 7 by the optical transceiver 205 using the optical space transmission if the traffic on the optical fiber transmission path is congested. The optical signals received by the optical transceiver 209 of the optical transmitting/receiving apparatus 503 referred here to as the node 7 using the optical space transmission are output into the node 8 by the switch 504.

In other words, although the above optical signals are usually routed through the node 1, the node 2, the node 3, the node 4, the node 5, the node 6, the node 7, and the node 8 in turn, these optical signals are routed through the node 1, the node 2, the node 7, and the node 8 in turn if the traffic on the optical fiber transmission path is congested, in order to maintain stable data transmission.

According to this embodiment, when the traffic converges and further the congestion occurs, the optical communication network can be established which achieves stable data transmission by bypassing the optical fiber transmission paths thus reducing the congestion and the number of the hops as in this embodiment in order to obviate possible evils such as a delay of the data transmission.

Also holding the advantage that it can be easily installed as long as the unobstructed view is maintained, the optical transmitting/receiving system according to the present invention can maintain the quality of communication even when the state of the propagation path is not fine, that is, the optical communication network can be established that can freely route the optical signals by employing the system in the optical communication network using optical fiber transmission paths.

Further since the optical transmitting/receiving system according to this embodiment can be established as long as the unobstructed view is maintained even where the installation of the optical fiber transmission paths is not completed, the installation of the network for optical signal transmission is facilitated.

Any optical transmitting/receiving system can be employed in the above two nodes as long as a high enough quality of communication is considered to be obtained, even using the conventional apparatuses under the circumstance that, for example, it is very close between the two nodes in which the optical space transmission path would be set up, in order to establish the optical communication network which can perform the free routing according to this embodiment. However, it is more preferable to employ the optical transmitting/receiving system according to the present invention since it provides the advantage that, for example, the quality of communication can be maintained even when the state of the propagation path is not fine, and consequently a longer optical space transmission distance can be applied.

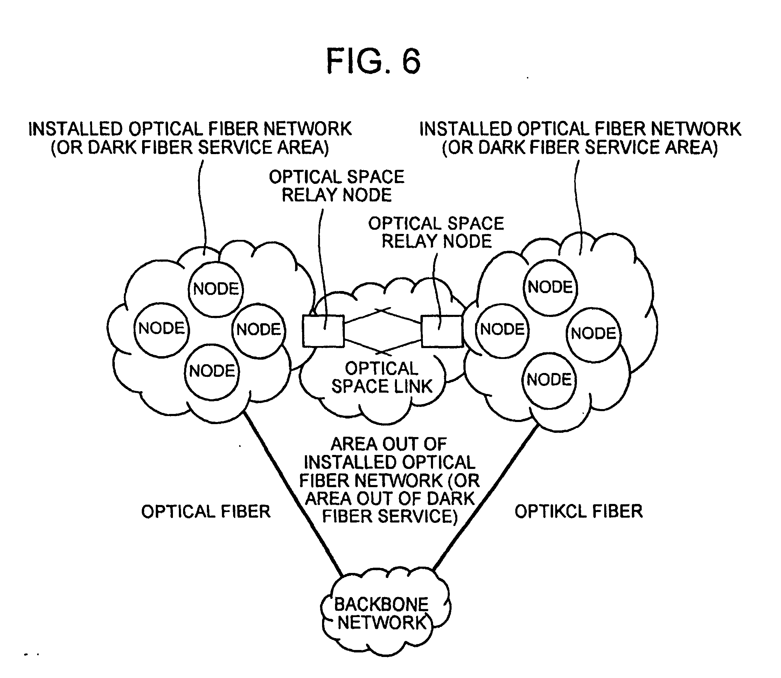

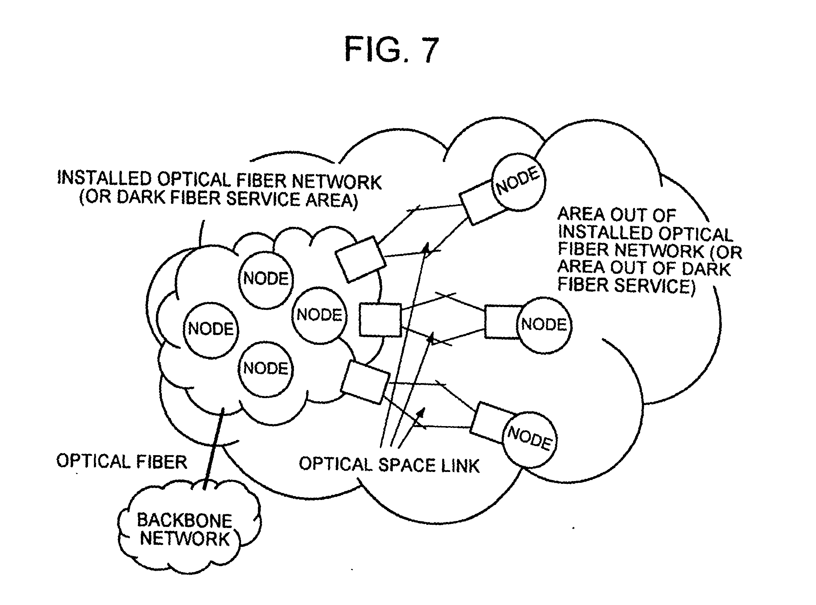

Some other aspects of this embodiment are now described with reference to Figs.6 and 7. Fig.6 shows another aspect of the optical communication network according to the second embodiment of the present invention. Two installed optical fiber networks (or dark fiber service areas) shown each including a plurality of nodes do not have a direct optical fiber link connecting each other, other than a route via a backbone network. Such direct link is easily achieved by providing the optical space transmission as in this embodiment between a node in one of the two networks and a node in the other of the two, if both of these nodes are located nearby with an unobstructed view between them, without installing the optical fiber paths. Consequently, the communication traffic in the backbone network is reduced, thereby a decline of performance such as transmission delay due to routing via the backbone network is obviated. Furthermore, since the optical space relay nodes can support any specification of the optical signal such as a rate of the transmission, analog or digital, WDM or not, and the like, the optical signals used in the fiber networks can be applied to the space optical transmission and a seamless connection of networks is available.

Fig.7 shows a further aspect of the optical communication network according to the second embodiment of the present invention. In area out of the installed optical fiber network (or in area out of the dark fiber service) there are a plurality of stand-alone nodes each of which does not have any optical fiber links to the installed optical fiber network (or the dark fiber service area). Such links are easily achieved by providing the optical space transmission as in this embodiment between one stand-alone node in the outside area and one node in the fiber network, if these two nodes are located nearby with an unobstructed view between them, without installing the optical fiber paths. Consequently, the stand-alone nodes can be added into the optical fiber network by applying the optical signals used in the fiber networks to the space optical transmission. Therefore, a necessity of the installation of the optical fibers or other communication media in order to communicate with the nodes outside of the optical fiber network is obviated, and the seamless connection of networks is made available.

Although the case of the one-way transmission is described in the above embodiments, the two-way transmission paths can be provided. The present invention can use any of multiplexing methods such as a time division multiplexing method, a wavelength division multiplexing method and the like in the optical space transmissions and in the optical fiber transmissions.

As described above, according to the present invention, the optical transmitting/receiving system for securing the quality of communication by reducing the propagation loss and for providing the advantage of easy installation, and the optical communication network which can be easily established by employing such system are achieved.

Further, according to the present invention, the method for establishing the optical communication network that includes the optical fiber transmission paths and the optical space transmission paths for preventing the communication traffic from converging and for achieving the stable data transmission is achieved.

The present invention is not limited to the specifically disclosed embodiments, and variations and modifications may be made without departing from the scope of the invention.

## Claims

1. An optical transmitting/receiving method in transmitting/receiving optical beams including optical signals via a space transmission path between an optical transmitting apparatus (204) and an optical receiving apparatus (208), wherein:
a degree of spread of the optical beam emitted from the optical transmitting apparatus to the optical receiving apparatus is varied according to a predetermined condition , **characterised in that**: said predetermined condition is defined on the basis of a state of the space transmission path between the optical transmitting apparatus and the optical receiving apparatus.

2. The optical transmitting/receiving method as claimed in claim 1, wherein:
the degree of spread of the optical beam is varied according to a condition that at the optical receiving apparatus the received level of the optical beam depending on the state of the space propagation path is constant.

3. An optical transmitting/receiving system comprising an optical transmitting apparatus (204) and an optical receiving apparatus (208) at which an optical beam including optical signals transmitted from the optical transmitting apparatus via a space transmission path is received, wherein:
the optical transmitting apparatus comprises a beam size controlling part (207) for varying a degree of spread of the optical beam emitted to the optical receiving apparatus according to a predetermined condition , **characterised in that**: said predetermined condition is defined on the basis of a state of the space transmission path between the optical transmitting apparatus and the optical receiving apparatus.

4. The optical transmitting/receiving system as claimed in claim 3, wherein:
the beam size controlling part varies the degree of spread of the optical beam according to a condition that at the optical receiving apparatus the received level of the optical beam depending on the state of the space propagation path is constant.

5. An optical communication network comprising a plurality of communication nodes each provided with a function of transmitting and receiving optical signals and connected by optical transmission paths, wherein:
at least one of the optical transmission paths connecting two of the communication nodes is configured as an optical space transmission path,
at least one of the two communication nodes (501,502) comprises a beam size controlling part (207,211) for varying a degree of spread of the optical beam emitted to the other communication node of the two according to a predetermined condition , **characterised in that**: said predetermined condition is defined on the basis of a state of the space transmission path.

6. The optical communication network as claimed in claim 5, wherein:
the beam size controlling part varies the degree of spread of the optical beam according to a condition that at the receiving communication node the received level of the optical beam depending on the state of the space propagation path is constant.

## Patentansprüche

1. Ein optisches Übertragungs-/Empfangsverfahren beim Übertragen/Empfangen von optischen Strahlen inkludierend optische Signale über einen Raumübertragungspfad zwischen einer optischen übertragenden Vorrichtung (204) und einer optischen empfangenden Vorrichtung (208), wobei:
ein Grad einer Ausbreitung des optischen Strahls, emittiert von der optischen übertragenden Vorrichtung zu der optischen empfangenden Vorrichtung, gemäß einer vorbestimmten Bedingung variiert wird, **gekennzeichnet dadurch, dass**:
die vorbestimmte Bedingung auf der Basis eines Zustands des Raumübertragungspfades zwischen der optischen übertragenden Vorrichtung und der optischen empfangenden Vorrichtung definiert ist.

2. Das optische Übertragungs-/Empfangsverfahren, wie in Anspruch 1 beansprucht, wobei:
der Grad einer Ausbreitung des optischen Strahls gemäß einer Bedingung variiert wird, dass in der optischen empfangenden Vorrichtung der empfangene Pegel des optischen Strahls abhängig von dem Zustand des Raumverbreitungspfades konstant ist.

3. Ein optisches Übertragungs-/Empfangssystem, umfassend eine optische übertragende Vorrichtung (204) und eine optische empfangende Vorrichtung (208), worin ein optischer Strahl inkludierend optische Signale, übertragen von der optischen übertragenden Vorrichtung über einen Raumübertragungspfad, empfangen wird, wobei:
die optische übertragende Vorrichtung einen Strahlengrößensteuerteil (207) zum Variieren eines Grades einer Ausbreitung des optischen Strahls, emittiert zu der optischen empfangenden Vorrichtung gemäß einer vorbestimmten Bedingung umfasst, **gekennzeichnet dadurch, dass**:
die vorbestimmte Bedingung auf der Basis eines Zustands des Raumübertragungspfades zwischen der optischen übertragenden Vorrichtung und der optischen empfangenden Vorrichtung definiert ist.

4. Das optische Übertragungs-/Empfangssystem, wie in Anspruch 3 beansprucht, wobei:
der Strahlengrößensteuerteil den Grad einer Ausbreitung des optischen Strahls gemäß einer Bedingung variiert, dass in der optischen empfangenden Vorrichtung der empfangene Pegel des optischen Strahls abhängig von dem Zustand des Raumverbreitungspfades konstant ist.

5. Ein optisches Kommunikationsnetz, umfassend eine Vielzahl von Kommunikationsknoten, jeder versehen mit einer Funktion zum Übertragen und Empfangen optischer Signale und verbunden durch optische Übertragungspfade, wobei:
mindestens einer der optischen Übertragungspfade, der zwei der Kommunikationsknoten verbindet, als ein optischer Raumübertragungspfad konfiguriert ist,
mindestens einer der zwei Kommunikationsknoten (501, 502) einen Strahlengrößensteuerteil (207, 211) zum Variieren eines Grades einer Ausbreitung des optischen Strahls, emittiert zu dem anderen Kommunikationsknoten der zwei gemäß einer vorbestimmten Bedingung umfasst, **gekennzeichnet dadurch, dass**:
die vorbestimmte Bedingung auf der Basis eines Zustands des Raumübertragungspfades definiert ist.

6. Das optische Kommunikationsnetz, wie in Anspruch 5 beansprucht, wobei:
der Strahlengrößensteuerteil den Grad einer Ausbreitung des optischen Strahls gemäß einer Bedingung variiert, dass in dem empfangenden Kommunikationsknoten der empfangene Pegel des optischen Strahls abhängig von dem Zustand des Raumverbreitungspfades konstant ist.

## Revendications

1. Procédé d'émission/réception optique dans l'émission/la réception de faisceaux optiques comportant des signaux optiques par l'intermédiaire d'une trajectoire d'émission spatiale entre un appareil d'émission optique (204) et un appareil de réception optique (208), dans lequel :
un degré d'étalement du faisceau optique émis par l'appareil d'émission optique vers l'appareil de réception optique est modifié conformément à une condition prédéterminée, **caractérisé en ce que** :
ladite condition prédéterminée est définie en fonction d'un état de la trajectoire d'émission spatiale entre l'appareil d'émission optique et l'appareil de réception optique.

2. Procédé d'émission/réception optique selon la revendication 1, dans lequel :
le degré d'étalement du faisceau optique est modifié conformément à une condition selon laquelle au niveau de l'appareil de réception optique le niveau reçu du faisceau optique dépendant de l'état de la trajectoire de propagation spatiale est constant.

3. Système d'émission/réception optique comprenant un appareil d'émission optique (204) et un appareil de réception optique (208) auquel est reçu un faisceau optique comportant des signaux optiques émis par l'appareil d'émission optique par l'intermédiaire d'une trajectoire d'émission spatiale, dans lequel : ,
l'appareil d'émission optique comprend une partie de commande de dimension de faisceau (207) pour modifier un degré d'étalement du faisceau optique émis vers l'appareil de réception optique conformément à une condition prédéterminée, **caractérisé en ce que** :
ladite condition prédéterminée est définie en fonction d'un état de la trajectoire d'émission spatiale entre l'appareil d'émission optique et l'appareil de réception optique.

4. Système d'émission/réception optique selon la revendication 3, dans lequel :
la partie de commande de dimension de faisceau modifie le degré d'étalement du faisceau optique conformément à une condition selon laquelle au niveau de l'appareil de réception optique le niveau reçu du faisceau optique dépendant de l'état de la trajectoire de propagation spatiale est constant.

5. Réseau de communication optique comprenant une pluralité de noeuds de communication dotés chacun d'une fonction d'émission et de réception de signaux optiques et connectés par des trajectoires d'émission optiques ; dans lequel :
au moins un des trajets d'émission optiques connectant deux des noeuds de communication est configuré en tant que trajectoire d'émission spatiale optique ;
au moins un des deux noeuds de communication (501, 502) comprend une partie de commande de dimension de faisceau (207, 211) pour modifier un degré d'étalement du faisceau optique émis vers l'autre noeud de communication des deux conformément à une condition prédéterminée, **caractérisé en ce que** :
ladite condition prédéterminée est définie en fonction d'un état de la trajectoire d'émission spatiale.

6. Réseau de communication optique selon la revendication 5, dans lequel :
la partie de commande de dimension de faisceau modifie le degré d'étalement du faisceau optique conformément à une condition selon laquelle au niveau de l'appareil de réception optique le niveau reçu du faisceau optique dépendant de l'état de la trajectoire de propagation spatiale est constant.
